# EUROPEAN PATENT APPLICATION

(11) **EP 1 168 352 A2**
(43) Date of publication of application: **02.01.2002**
(21) Application number: 01115019.0
(22) Date of filing: 20.06.2001
(51) Int. Cl.: G11B 33/14

(54) **Data storage system**

(30) Priority: 21.06.2000 JP 2000186231
(71) Applicant: Asaca Corporation, Hino-shi, Tokyo 191-0065 (JP)
(72) Inventor: Kuwayama, Noritada, Hino-shi, Tokyo (JP)
(74) Representative: Manitz, Finsterwald & Partner GbR

(57) **Abstract**

A data storage system or library system 10 has a dust collector 36 in a chamber 24 or interior of the housing 12. The dust collector 36 has a container 48 with first openings 52 and 54 and second openings 68, filters 64 and 66 provided at the first openings 52 and 54, and a fan 70 for forming a stream of air running through the first openings 52 and 54 and the second openings 68. With the system 10, the housing 12 is substantially closed so that substantially no dust enters into the housing 12. Also, dust generated in the housing 12 is effectively collected by the filters 64 and 66.

## Description

### FIELD OF THE INVENTION

The present invention relates to a data storage system or library system for storing a number of data recording media.

### BACKGROUND OF THE INVENTION

Conventionally, there have been known various data storing systems or library systems. Typically, the data storing system has a housing that receives a storage station for storing a number of data recording media including CD-ROMs and MDs, for example, a read station for reading out data memorized in each of the data recording media, and a transport station for transporting each of the data recording media between the storage and read stations. Meanwhile, an optical disk such as DVD capable of memorizing a great number of data per unit area tends to be used for the data recording medium. The optical disk, however, has an inherent disadvantage that even a small dust if any can deteriorate the reproduction of the data stored in a disk portion underneath the dust and the writing of data into the portion. In particular, for MO disks and DVDs capable of recording a great number of data in a small area, a ratio or efficiency of data reproduction and data writing depends on the existence of the unwanted dust to a large extent.

Another data storing system has been proposed in the art. The system has a ventilator for exhausting heat generated in the housing enclosing the storage, read, and transport stations. Specifically, the housing is defined with an inlet opening for drawing air into the housing and an outlet opening for exhausting air from the housing. Also typically a fan is provided near the outlet opening. This allows that air heated within the housing is exhausted through the outlet opening and, in turn, exchanged with fresh air.

The ventilator is used simply for exhausting heated air from the housing. Also, each of the inlet and outlet openings is covered with a mesh. However, a size of each opening defined in the mesh is rather large so that the mesh fails not only to prevent the dust in an exterior of the housing from entering into an interior thereof but also to collect the dust generated at the components in the housing.

This allows the dust in the housing to be placed on the data recording media, which causes defects in data reproduction and recording. Also, the ratio of defect in the data reproduction and recording is increased with time in proportion to the increase of dust in the housing.

### SUMMARY OF THE INVENTION

Therefore, an object of the present invention is to provide a data storage system and a method for preventing dust from entering into the housing and also collecting dust generated within the housing.

Accordingly, a data storage system has a housing that defines a chamber. The chamber receives a storage station for receiving a plurality of recording media and a transport station for transporting the recording medium from and into the storage station. The housing is substantially closed so that substantially no dust enters from an exterior into an interior of the housing.

The "substantially closed" means that no dedicated opening exists for moving air between its interior and exterior. Also, it does not intend to deny any existence of gaps unavoidably formed at connections between panels, one or more doors for opening the interior of the housing or for insertion and extraction of components or parts into and from the housing.

Further, according to the first aspect of the present invention, a dust collector is provided in the interior of the housing. The dust collector has a filter for collecting dust and a fan for forming a stream of air that moves past the filter.

According to the second aspect of the present invention, the dust collector has a container with first and second openings, a filter provided at the first opening, and a fan provided at the second opening for forming a stream of air moving past the first and the second openings.

With the' data storage system of the present invention, the substantially closed housing prevents the invasion of dust from its exterior into its interior. Also, the dust generated in the housing is caught by the stream of air formed by the fan and then collected by the filter. For this purpose, a performance of the filter, i.e., minimum size of the dust to be collected by the filter, should be determined by the size of dust that would cause any recording and reproducing defect when it adheres onto the recording medium.

Another aspect of the present invention is to provide a method for collecting dust for use with the data storage system. The method has steps of providing a substantially closed housing for receiving the storage station and the transport station, providing a filter in the housing for collecting dust in the housing, and forming a stream of air which moves past the filter, so that dust in the housing is caught by the stream of air and then collected by the filter.

### BRIEF DESCRIPTION OF THE DRAWINGS

Fig. 1 is a schematic perspective view of a library system of the present invention;
Fig. 2 is a cross-sectional view taken along line II-II in Fig. 1;
Fig. 3 is a perspective view of a dust collector received in the housing of the library system in Fig. 1; and
Fig. 4 is a cross-sectional view taken along line IV-IV in Fig. 3.

Like reference numerals designate like parts throughout the drawings.

### DETAILED DESCRIPTION OF THE PREFERRED EMBODIMENTS

With reference to the drawings, a specific embodiment of the present invention will be described hereinafter. It should be noted that although various directional terms including "top" and "bottom", for example, in order to improve the understanding of the invention, the present invention is not limited by those terms.

### 1. Overview of data storage system

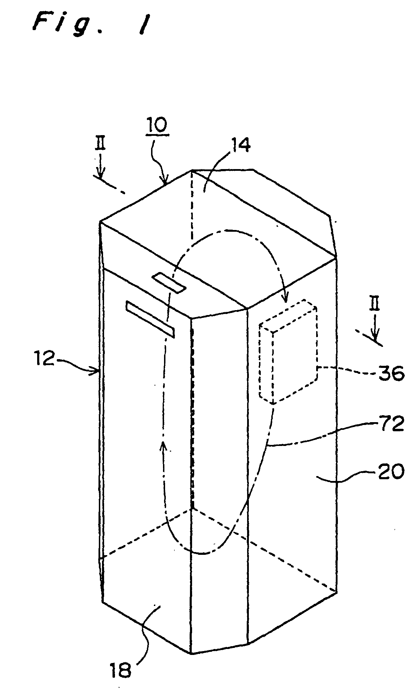

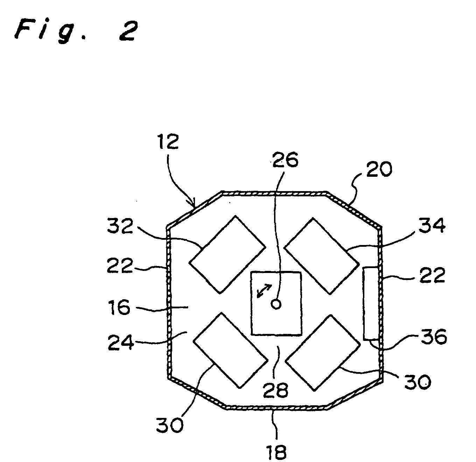

Referring to Fig. 1, there is shown an overview of a library system generally indicated by reference numeral 10, which is an embodiment of a data storage system of the present invention. Also, as shown in Fig. 2, the library system 10 has a housing generally indicated by reference numeral 12 for receiving various components or stations required for the storage of data. The housing 12 is defined by top wall 14, bottom wall 16, and side wall connecting between the top and bottom walls, 14 and 16. The side wall is made up of front panel 18, rear panel 20, and left and right panels 22. Those panels and walls are connected with each other in an airtight fashion to define a substantially closed interior or chamber 24 in the housing 12. The front and rear plates, 18 and 20, are hinged on the left or right side wall 22, respectively, so that the components or stations mounted in the housing 12 can be accessed for service and repair. Also, the front panel 18 is provided with inlet and outlet openings defined therein for insertion and extraction of storage medium described after and, if necessary, an operating and/or displaying devices.

The "substantially closed" means that no dedicated opening, e.g., exhausting opening is defined for causing air to move between the interior and the exterior of the housing 12 but does not deny the existence of the opening closed with openable door or cover for service or repair and for insertion and extraction of components, or unavoidable gaps or clearances leaving between the neighboring panels. This may allow a small amount of dust to enter the interior of the housing 12 through the gaps and when the door is opened, thought, such small amount of dust would not be harmful to the operation of the library system.

As best shown in Fig. 2, a vertical shaft 26 is provided in the interior 24 of the housing 12. A medium transport or handler (transport station) 28 for transporting a storage medium is supported by the shaft 26 so that it moves ups and downs and rotates about the shaft 26. Positioned around the media transport 28 are one or more storage units 30, one or more read units 32, and one or more write units 34. The storage unit 30 has a number of shelves (not shown) for receiving a number of optical or magnetic recording media including CD-ROMs, DVD-RAMs, and DVD-ROMs, for example. The read station 32 is used for reading information recorded in each of the recording media. Also, the write station 34 is used for writing and recording information into each of the recording media. The read and write stations 32 and 34 may be replaced with an integrated read/write unit capable of reading and writing information from and into each of the recording media. Also, the data storage system may have only the read station 32 or the write station 34.

### 2. Operation of data storage system

Descriptions will be made to the operation of the library system 10 so constructed. Any one of the storage media received in the storage station 30 is picked up by the handler 28. For this purpose, the handler 28 moves up or down along the shaft 26 and, if necessary, rotates about the shaft 26 so as to face the shelf where the recording medium to be extracted therefrom is received. Then, the handler 28 holds the recording medium by using a holding mechanism (not shown) thereof. For reproducing the information recorded in the medium, the handler 28 again moves up or down along the shaft 26 and, if necessary, rotates about the shaft 26 to face the designated read station 32 to which the recording medium is transferred. On the other hand, for recording information on the extracted recording medium, the handler 28 moves to the designated write station 34 to which the recording medium is transferred. After the completion of the reproduction or the recording, the handler 28 extracts the recording medium from the read station 32 or write station 34. Then, the handler 28 moves up or down along the shaft 26 and, if necessary, rotates about the shaft 26 to return the recording medium to the original shelf.

### 3. Structure of dust collector

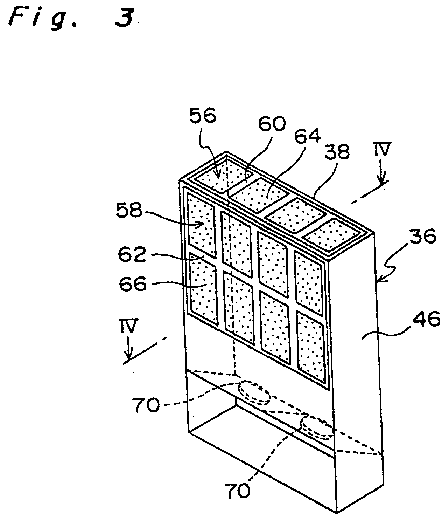

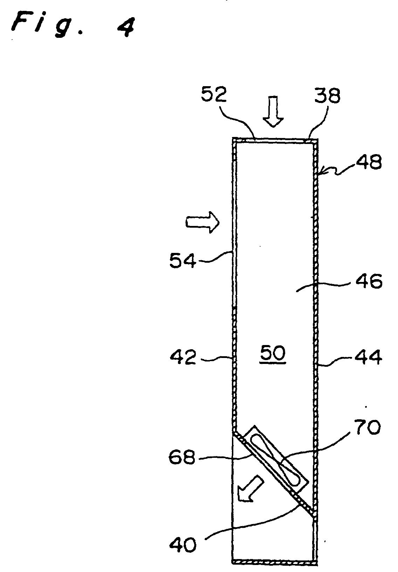

The library system 10 also includes a dust collector 36 for collecting dust generated by the various components in the housing 12. As best shown in Figs. 3 and 4, the dust collector 36 has a rectangular, box-like container 48 made of top wall 38, bottom wall 40, front wall 44, rear wall 44, and left and right walls 46, defining an air passage 50 or chamber therein. Preferably, each wall is made from a suitable material such as metal or plastic.

The top wall 38 and the front wall 42 have respective openings (first openings) 52 and 54. The openings 52 and 54 are provided with removable filtering devices 56 and 56, respectively. Basically, the filtering devices 56 and 58 have frames 60 and 62 made of metal or plastic and filters 64 and 66 retained by the frames 60 and 62, respectively. Each of the filters 64 and 66, in particular a mesh size of the filters, is chosen so that the filter collects small dust such as abrasion dust which is generated by contacts of the mechanical components and would cause the reading and/or writing defects of information on the medium. The minimum size of the dust required to be collected may range from one to ten microns. Preferably, a filter commercially available from Bridgestone Co. under the tradename of HB-30 is suitably used for the filters 64 and 66.

The bottom wall 40, which is slanted downward from the front wall 42 to the rear wall 44, has one or more openings 68 defined therein. Each of the openings 68 receives a ventilator or electric fan 70 fixedly mounted therein. Preferably, an electric fan commercially available Sanyo Electric Co. Ltd. under the tradename of 10-R812H402 is used for the electric fan 70.

The dust collector 36 so constructed is positioned in a certain place in the housing 12. In this embodiment, as shown in Figs. 1 and 2 the duct collector 36 is fixed at the upper portion of the side wall 22. However, the position of the dust collector 36 is not limited thereto and it may be provided on the inside surface of the top, bottom, front or rear wall.

### 4. Operation of dust collector

In operation of the dust collector 36, when the fans 70 are energized, air in the passage 50 is forced out of the openings 68 and then circulated in the housing 12 as shown by a short and long dotted line 72 in Fig. 1. The stream of air catches dust generated in the housing 12 and then returns through filters 64 and 66 at the openings 52 and 54, respectively, into the passage 50. This causes the dust to be caught and collected by the filters 64 and 66. Preferably, the filters 64 and 66 are exchanged with new ones at certain intervals. In addition, the circulation of air 72 causes a diffusion of heat generated at the various components in the housing 12, preventing an unwanted accumulation of heat at certain place or places.

As described above, the housing 12 is substantially closed, which does not prohibit the existence of the possible small gaps between the panels or components of the housing 12 or the existence of openable doors for service and repair. Also, an opening of the front wall 18 and/or rear wall 20 allows an invasion of a small amount of dust into the. interior 24 of the housing 12. Such dust are also caught by the stream air in the housing 12 and then collected by the filters 64 and 66.

Although the electric fans 70 are driven so that air in the passage 50 is forced out through the associated opening, it may be energized so that it draws air through the opening.

Also, the container 48 is provided to support the filters 64 and 66 and the electric fans 70, it may be eliminated from the dust collector 36. In this instance, the filter and fan may be supported by another members so that the fan generates the air stream for catching dust in the housing and then transporting the caught dust through the filter for the removal of the dust.

As can be seen from above, according to the present invention, substantially no dust is drawn from the exterior into the interior of the housing of the library system. Also, the dust generated in the housing is collected effectively by the filter. This prevents the dust from adhering to the information recording media, which in turn ensures the information to be read from and recorded into the recording media without any defect.

## Claims

1. A data storage system, comprising:
a housing defining a chamber therein for a storage station for receiving a plurality of recording media and a transport station for transporting the recording medium from and into the storage station, the housing being substantially closed so that substantially no dust enters from an exterior into an interior of the housing; and
a dust collector provided in the interior of the housing, the dust collector having a filter for collecting dust and a fan for forming a stream of air that moves past the filter.

2. A data storage system, comprising:
a housing defining a chamber therein for a storage station for receiving a plurality of recording media and a transport station for transporting the recording medium from and into the storage station, the housing being substantially closed so that substantially no dust enters from an exterior into an interior of the housing; and
a dust collector provided in the interior of the housing, the dust collector having a container with first and second openings, a filter provided at the first opening, and a fan provided at the second opening for forming a stream of air moving past the first and the second openings.

3. A method for collecting dust for use with a data storage system with a storage station for storing information media and a transport station for transporting each of the information media from one place to another, comprising the steps of:
providing a housing for receiving the storage station and the transport station, the housing being substantially closed so that substantially no dust enters from an exterior of the housing into an interior of the housing;
providing a filter in the housing for collecting dust in the housing; and
forming a stream of air which moves past the filter, so that dust in the housing is caught by the stream of air and then collected by the filter.
